# EUROPEAN PATENT APPLICATION

(11) **EP 4 722 528 A1**
(43) Date of publication of application: **08.04.2026**
(21) Application number: 25205608.0
(22) Date of filing: 30.09.2025
(51) Int. Cl.: F03D 1/06

(54) **METHOD FOR REMOVING A PEEL PLY FROM A WIND TURBINE ROTOR BLADE COMPONENT AND DEVICE FOR PERFORMING THE METHOD**

(30) Priority: 04.10.2024 IN 202441075013
(71) Applicant: Nordex Energy SE & Co. KG, 22419 Hamburg (DE)
(72) Inventor: Jadhav, Jagdish, 560001 Bangalore (IN); Korkmaz, Kazim, 22419 Hamburg (DE)
(74) Representative: Epping - Hermann - Fischer

(57) **Abstract**

The invention relates to a method for removing a peel ply layer (152) from a wind turbine rotor blade component (136), comprising the steps of: i) providing a wind turbine rotor blade component (136) comprising a surface (153, 154) which is covered by a peel ply layer (152), ii) providing a cart (141) comprising a spindle (143) and a motor (142) configured to rotate the spindle (143), iii) connecting a first portion of the peel ply layer (152) with the spindle (143), and iv) rotating the spindle (143) via the motor (142) such that the rotation of the spindle (143) pulls the peel ply layer (152) from the wind turbine rotor blade component (136) and winds the peel ply layer (152) around the spindle (143), wherein the cart (141) is propelled forward in a longitudinal direction (120) of the wind turbine rotor blade component (136). The invention also concerns a device of performing this method.

## Description

The invention concerns a method for removing a peel ply from a wind turbine rotor blade component and device for performing the method.

Wind turbines with wind turbine rotor blades are widely known from the state of the art and are used to convert wind energy into electrical energy. Wind turbine rotor blades are usually manufactured in an aerodynamic shell design and comprise several components made of fiber-reinforced laminate, such as an aerodynamic shell. Typically, a wind turbine rotor blade has an elongated design, having a root for attaching the rotor blade to the rotor hub. The wind turbine rotor blade extends from the root to a tip. Typically, two half shells are produced, which are placed on top of each other after their respective manufacture and bonded together to produce the wind turbine rotor blade. Alternatively, the rotor blade can be manufactured integrally.

For manufacturing wind turbine rotor blades, prefabricated components can be used which are often covered by a peel ply layer as a protective layer. The peel ply layer shall protect the wind turbine rotor blade component from environmental influences, e.g., from dust or humidity, and from being accidentally damaged, e.g., by being scratched during a transport. After removing the peel ply layer, the surface of the component is clean and in the case of further processing, activated.

Before the component can be assembled into the rotor blade, the peel ply layer has to be removed from the surface of the component. The removal of the peel ply layer can be made manually. A manual removal process is very time consuming and involves a large amount of human work force. Moreover, during the manual removal process, the component may be lifted to remove a peel ply layer from a bottom surface, thereby creating a hazardous environment due to the weight being suspended.

It is an object of the invention to provide an improved method for removing a peel ply layer from a wind turbine rotor blade component.

This object is achieved by the independent claim. Advantageous embodiments are given in the sub-claims.

According to a first aspect, a method for removing a peel ply layer from a wind turbine rotor blade component is proposed. The method comprises the steps of:
i) providing a wind turbine rotor blade component comprising a surface which is covered by a peel ply layer,
ii) providing a cart comprising a spindle and a motor configured to rotate the spindle,
iii) connecting a first portion of the peel ply layer with the spindle,
iv) rotating the spindle via the motor such that the rotation of the spindle pulls the peel ply layer from the wind turbine rotor blade component and winds the peel ply layer around the spindle, wherein the cart is propelled forward in a longitudinal direction of the wind turbine rotor blade component.

The wind turbine component covered by a peel ply layer can be provided such, that it is layed on a support structure. The support structure bears the component on predetermined point. The cart comprising a spindle and a motor configured to rotate the spindle is arranged close to the component. The cart can be moved along the component such, that the spindle is guided above or below the component.

The first portion of the peel ply layer is removable connected to the spindle, e.g. by adhesive tape or a clamping device.

By using the spindle to pull the peel ply layer from the component, the time required for the removal of the peel ply layer can be shortened compared to a completely manual removal for more than 50 percent.

Step iv), in which most of the peel ply layer is removed, can be carried out without requiring human work force. Thus, the exposure of a human worker to a potentially hazardous environment is reduced and the risk of any accident involving a technician is reduced compared to a completely manual removal process.

The reduction of human work force to complete the peel ply layer removal process allows to reduce the manufacturing costs of the rotor blade.

According to one embodiment, the wind turbine rotor blade component is a spar cap. The wind turbine rotor blade component may also be a part of a spar cap, a part of a half shell of the rotor blade, a shear web or an entire half shell of the rotor blade.

According to one embodiment, the first portion of the peel ply layer is removed manually from the wind turbine rotor blade component in step iii). The first portion may be removed by a worker pulling a corner of the peel ply layer away from the wind turbine rotor blade component. The first portion may form only a small part of the peel ply layer. Thus, even though the first portion is removed manually, the removal of the first portion can be done fast due to the short length of the first portion.

According to one embodiment, the first portion has a length of less than one meter. Preferably, the first portion has a length in the range of 20 cm to 80 cm. The length of the first portion is sufficiently long to ensure that the first portion does not slip from the spindle after being wound around the spindle. Thus, it is preferred that the first portion has a length of at least 20 cm. The length of the first portion is sufficiently short to ensure that the manual removal process of the first portion is not time consuming. Thus, it is preferred that the first portion has a length of not more than one meter or even not more than 80 cm.

According to one embodiment, the cart is propelled forward in the longitudinal direction by a reaction force generated by the motor and the spindle. In other words, no human interaction is required for propelling the cart forward. This contributes to the above-mentioned functions and advantages. The term "longitudinal direction" refers to a direction from a root end of a component to a tip end of the component.

According to an alternative embodiment, the cart comprises a pair of wheels and a second motor, wherein the cart is propelled forward in the longitudinal direction during step iv) by the second motor rotating the pair of wheels. By providing a second motor, it becomes possible to better control the speed by which the cart is propelled forward. Moreover, the force applied by the spindle onto the peel ply layer only has to be strong enough to detach the peel ply layer from the surface and does not have to be strong enough to also propel the cart forward. Thus, a lower force may be applied by the spindle to the peel ply layer, which may allow a smoother process of removing the peel ply layer, wherein a risk of rupturing the peel ply layer during removal is reduced.

According to one embodiment, during step iv), the peel ply layer which is pulled from the wind turbine rotor blade component and the peel ply layer which is still on the wind turbine rotor blade component enclose an angle in the range of 80° to 90°. In other words, the peel ply layer is pulled in a direction which is substantially perpendicular to the surface of the wind turbine rotor blade component. The angle between the peel ply layer which is pulled from the wind turbine rotor blade component and the peel ply layer which is still on the wind turbine rotor blade component can be controlled by the force applied by the motor and the spindle.

According to one embodiment, before step iii), the wind turbine rotor blade component is lifted above the cart, and the peel ply layer is removed from a bottom surface of the wind turbine rotor blade component which faces towards the ground during step iv). When the component is lifted, a potentially hazardous environment is created under the component due to the often very large weight of the component. The present method can be performed semiautomatically. For step iii), a human worker needs to be present. In step iv), no worker needs to be present in the potentially hazardous area below the lifted component. Thus, especially when removing a peel ply layer from a bottom surface, the risk of accidents is reduced.

The term "bottom surface" shall refer a surface facing towards the ground floor.

According to one embodiment, the cart comprises at least one rotatable bar on which the wind turbine rotor blade component rests during step iv). For example, the cart may comprise two or three rotatable bars. As the bars are rotatable, the cart can roll underneath the component without scratching the surface of the component. Alternatively, the component may rest on a holding frame during steps iii) and iv).

According to one embodiment, the wind turbine rotor blade component is arranged below the spindle during step iii). The peel ply layer is removed from a top surface of the wind turbine rotor blade component which faces away from the ground during step iv). The term "top surface" shall refer a surface facing away from the ground floor. Accordingly, the method is suitable to remove a peel ply layer from a bottom surface and from a top surface of the component.

According to one embodiment, a first peel ply layer is removed from a bottom surface of the wind turbine rotor blade component, which faces towards the ground during step iv), and a second peel ply layer is removed from a top surface of the wind turbine rotor blade component which is opposite of the bottom surface. This contributes to the above-mentioned functions and advantages.

According to one embodiment, a length of the spindle is bigger than a maximum width of the wind turbine rotor blade component. The cart may not be perfectly aligned with the wind turbine rotor blade component at the beginning of step iii). In this case, the cart moves in a slightly tilted direction relative to the longitudinal direction of the component when propelled forward. However, as the length of the spindle can be bigger than a maximum width of the component, the spindle can be long enough such that the peel ply layer can be wound around the spindle completely, even in this scenario. For example, the length of the spindle can be between 1.1 times the maximum width of the component and twice the maximum width of the component.

According to one embodiment, the spindle comprises a cross-section which is configured to generate friction between the first portion of the peel ply layer and the spindle to avoid slippage of the peel ply layer. For example, the spindle may comprise four separate rods. The spindle may have a rectangular cross-section or a round cross-section. By avoiding slippage of the peel ply layer it is ensured that the peel ply layer is not separated from the spindle between steps iii) and iv).

According to one embodiment, the cart is propelled along rails in step iv). The rails may be arranged on the ground floor. The rails can ensure that the cart is moved in a straight line and does not move away sideways to the component. Thus, by adding rails, the reliability of the method can be improved.

According to a second aspect, a device for performing the above-described method is proposed. The device comprises a cart comprising a spindle and a motor configured to rotate the spindle, wherein the cart is configured to be propelled forward in a longitudinal direction by a rotation of the spindle. The cart may also comprise wheels and a frame comprising steel tubes.

The device enables the functions and advantages of the method of the first aspect. The above-described embodiments with respect to the first aspect analogously apply to the device according to the second aspect.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figures 4 and 5 show perspective views of a cart,
Figure 6 shows a top view of the cart shown in Figures 4 and 5,
Figure 7 shows a spindle and a motor,
Figure 8 shows a peel ply layer being removed from a bottom surface of a wind turbine rotor blade component,
Figure 9 shows a peel ply layer being removed from a top surface of a wind turbine rotor blade component, and
Figure 10 shows a schematic flow chart of a method for removing a peel ply layer from a surface of a wind turbine rotor blade component.

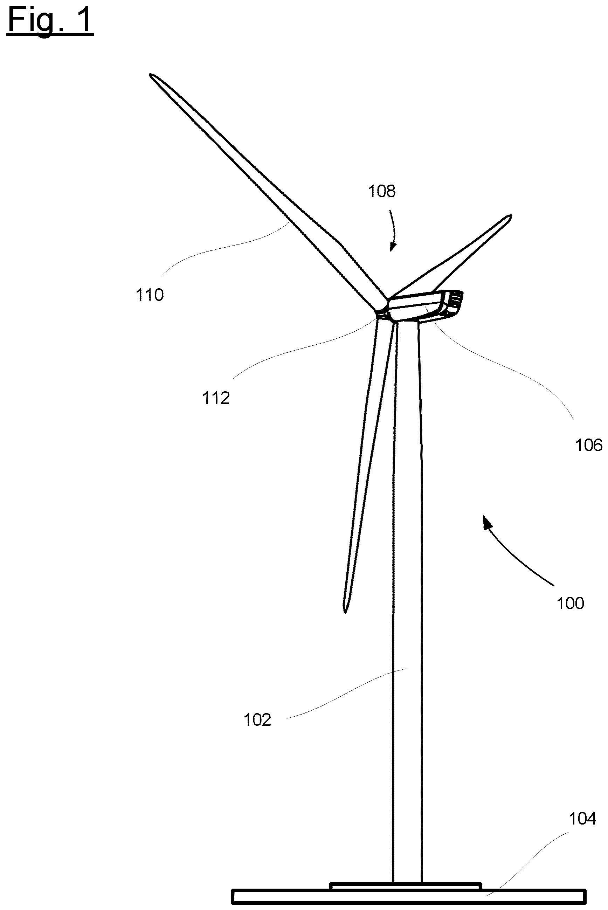

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

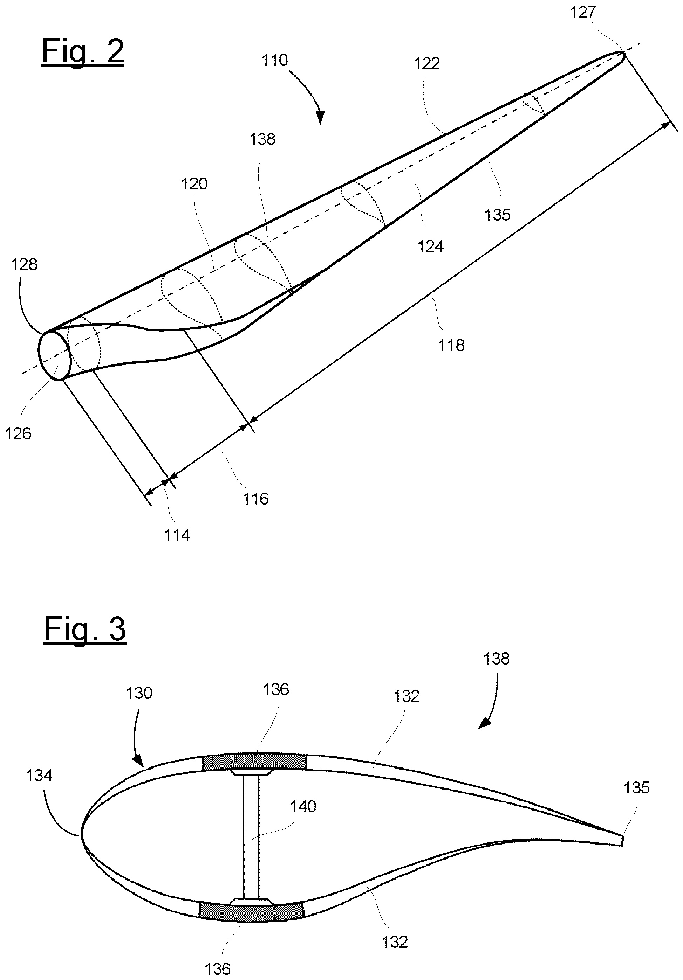

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 extending along a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

Figure 3 shows a schematic cross-section profile 138 (see Figure 2) of the wind turbine rotor blade 110 running traverse to the longitudinal direction 120. The rotor blade 110 has an aerodynamic shell 130 comprising two half shells 132, i.e., a pressure side half shell and a suction side half shell. The two half shells 132 are firmly connected to each other along the longitudinal axis at opposite connecting surfaces located at the leading edge 134 and trailing edge 135.

Each half shell 132 comprises a shell structure. The shell structure comprises a plurality of laminate layers. The plurality of laminate layers comprises inner laminate layers facing towards an inside of the half shell 132, outer laminate layers facing towards an outside of the half shell 132, and a core material sandwiched between the inner laminate layers and the outer laminate layers.

Each half shell 132 has at least one spar cap 136 embedded in the shell structure. A spar cap 136 can also be generally named "main laminate" and carries main loads during operation of the rotor blade 110. The rotor blade 110 may further comprise at least one shear web 140 connecting the spar caps 136 within the rotor blade 110.

The spar cap 136 can be a prefabricated part. Thus, the spar cap 136 can be manufactured before being embedded in the shell structure of the half shell 132. Therefore, a peel ply layer is provided on a bottom surface of the spar cap 136 and a peel ply layer is provided on a top surface of the spar cap 136. The peel ply layers have to be removed shortly before the spar cap 136 is embedded in the half shell 132.

Here, the spar cap 136 is described as an example of a wind turbine rotor blade component 136 which is covered by a peel ply layer before being embedded in the rotor blade 110. The method for removing the peel ply layer which is described in the following and the cart used in this method can also be used for other wind turbine rotor blade components 136.

Instead of removing the peel ply layers completely manually, a cart 141 is used to remove the peel ply layers.

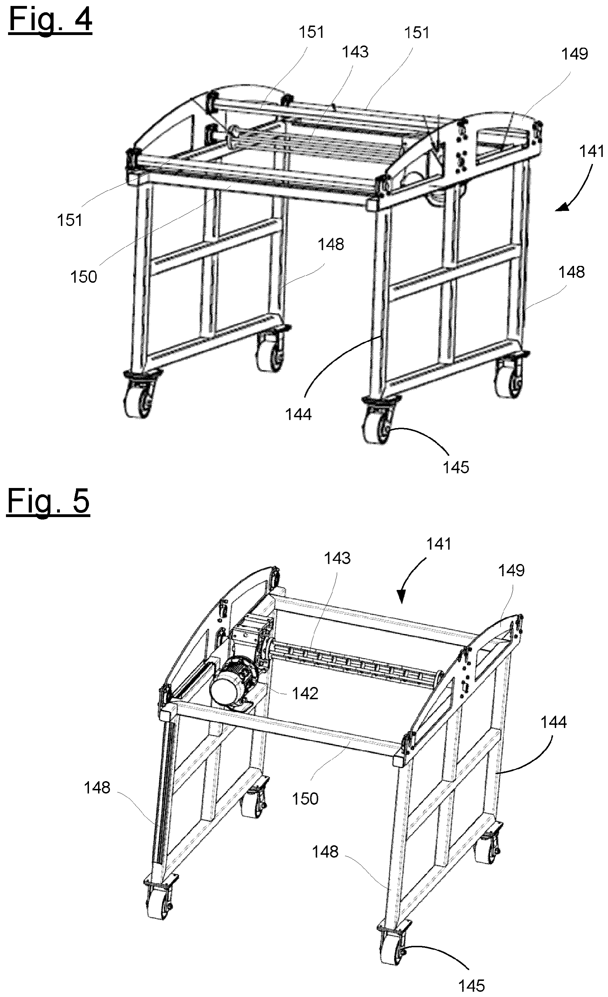

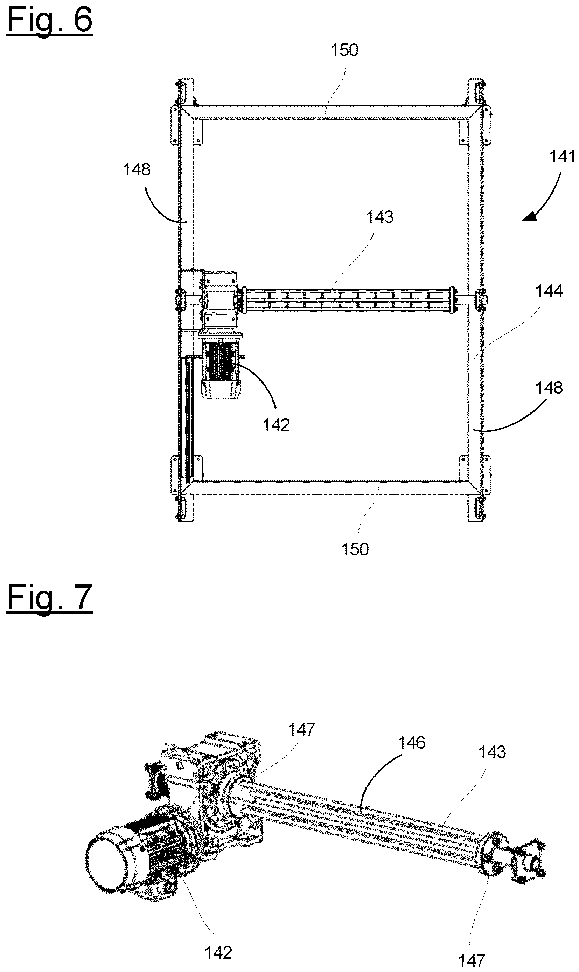

Figures 4 and 5 show perspective views of the cart 141. Figure 6 shows a top view of the cart 141. Figure 7 shows a perspective view of a motor 142 and a spindle 143 of the cart 141.

The cart 141 comprises a frame 144, the spindle 143, the motor 142 and wheels 145.

The motor 142 is connected to the spindle 143. The motor 142 is configured to drive the spindle 143. In particular, the motor 142 is configured to rotate the spindle 143.

As will be described later in more detail, an end of the peel ply layer can be connected with the spindle 143 and the peel ply layer can be wound around the spindle 143 when the spindle 143 is rotated by the motor 142.

The wind turbine rotor blade component 136 has a length, a width and a height. The length is defined as the extension of the wind turbine rotor blade component 136 in the longitudinal direction 120, i.e., in a direction from the root end 126 to a tip end 127 of the rotor blade 110 when the wind turbine rotor blade component 136 is assembled in the blade 110. Typically, the length of the component 136 is significantly longer than its width and its height. The width of the wind turbine rotor blade component 136 is defined as the extension of the wind turbine rotor blade component 136 in a chordwise direction when the wind turbine rotor blade component 136 is assembled in the blade 110.

A length of the spindle 143 is bigger than a maximum width of the wind turbine rotor blade component 136. For example, the length of the spindle 143 can be bigger than a maximum width of the wind turbine rotor blade component 136 by 5 to 20%, for example, by approximately 10%. Thus, it is ensured that the peel ply layer can be wound around the spindle 143 even at a position wherein the wind turbine rotor blade component 136 and the peel ply layer have their maximum width.

The spindle 143 comprises a cross-section which is configured to generate friction between the peel ply layer and the spindle 143. This avoids slippage of the peel ply layer from the spindle 143. In the embodiments shown in Figures 4 to 7, the spindle 143 comprises four rods 146 which are parallel to each other. Each of the rods 146 can have a circular, elliptic or rectangular cross-section. Additionally, the spindle 143 comprises two plates 147 arranged at opposite ends of the spindle 143. Each of the four rods 146 is fixed to the two plates 147. The motor 142 is configured to drive one of the plates 147, thereby rotating the entire spindle 143.

In an alternative embodiment, the spindle 143 may comprise a different number of rods 146. It is also possible that the spindle 143 comprises single rod 146.

The spindle 143 is configured to avoid slippage of the peel ply layer. For this purpose, a material of the spindle 143 may be chosen which has a high coefficient of friction in contact with the peel ply layer and/or a cross-section of the spindle 143 may be chosen which generates friction to the peel ply layer. If sufficient friction is not generated between the spindle 143 and the peel ply layer to avoid slippage, a larger portion of the peel ply layer can be wound around the spindle 143, thereby also preventing slippage.

The cart 141 further comprises the frame 144. The frame 144 provides a mechanical stability to the cart 141 even when the cart 141 is propelled forward. The frame 144 is a holding structure to which all other components of the cart 141 are fixed. The wheels 145, the motor 142 and the spindle 143 are fixed to the frame 144.

The frame 144 comprises steel tubes. Steel tubes provide a strong mechanical stability and have a moderate weight. Thus, the cart 141 is not too heavy to be pulled forward.

The frame 144 comprises two identical side parts 148. In each side part 148, the steel tubes form a rectangle and a cross arranged in the rectangle. Each side part 148 comprises a metal sheet 149. The metal sheet 149 is fixed to a top end of each side part 148 facing away from the ground floor.

The frame 143 comprises two horizontal steel tubes 150. The two side parts 148 are connected to each other by the two horizontal steel tubes 150 and by the spindle 143. The two horizontal steel tubes 150 are parallel to the spindle 143. The spindle 143 is arranged between the two horizontal steel tubes 150.

The frame 144 comprises three rotatable bars 151. Two of the rotatable bars 151 are parallel to the horizontal steel tubes 150. One rotatable bar 151 is parallel to the spindle 143. The rotatable bars 151 are fixed to the metal sheet 149 such that they can rotate around their axes. The cart 141 is configured to be placed below a wind turbine rotor blade component 136, wherein the component 136 rests on the rotatable bars 151. The cart 141 is configured to roll along the component 136, wherein the rotatable bars 151 are rotating, thereby allowing the cart 141 to be moved relative to the component 136.

The cart 141 further comprises wheels 145, for example four wheels. Two wheels 145 are arranged at a bottom side of each of the side parts 148. The wheels 145 are configured to enable a rolling of the cart 141 along a floor. The wheels 145 can be arranged in a rail which guides the rolling movement of the cart 141. Alternatively, the wheels 145 can also roll on a flat floor.

In an alternative embodiment example (not shown), the cart 141 comprises two motors 142. The first motor is configured to rotate the spindle 143. The second motor is connected to a pair of wheels 145 and is configured to rotate the wheels, thereby propelling the cart 141 forward.

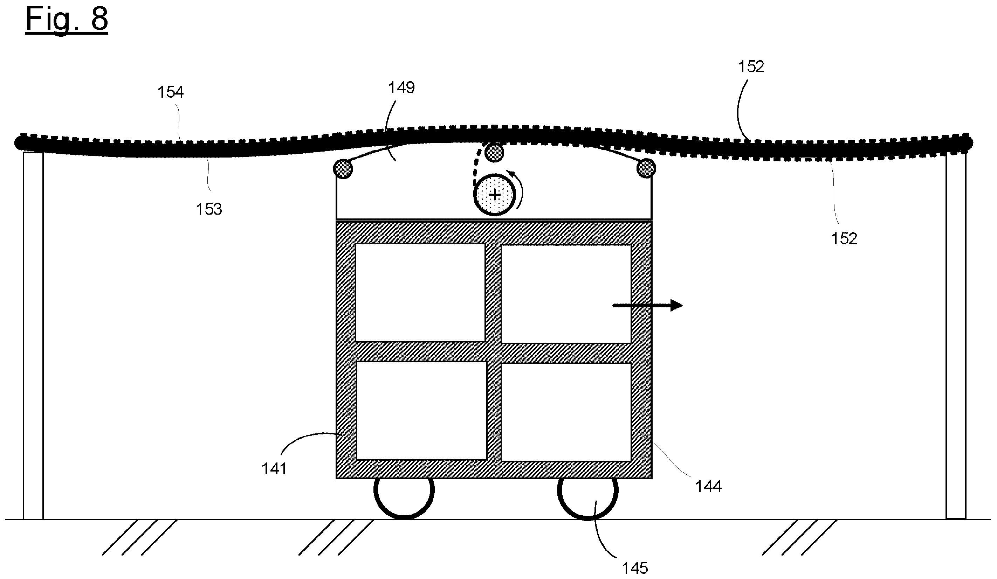

Figure 8 shows a method for removing a peel ply layer 152 from a spar cap 136. The peel ply layer 152 is arranged on a bottom surface 153 of the spar cap 136. The term "bottom surface" shall refer to the surface which faces towards the ground floor.

The spar cap 136 is positioned above the cart 141. In the embodiment shown in Figure 8, the spar cap 136 rests on the middle rotatable bar 151 of the cart 141. However, in an alternative method, the spar cap 136 could rest on all the rotatable bars 151 of the cart 141.

A first portion of the peel ply layer 152 is manually removed from the bottom surface 153 of the component 136 and is connected to the spindle 143. For example, the first portion of the peel ply layer 152 is wound around the spindle 143.

Then, the motor 142 is switched on and the spindle 143 begins to rotate. Due to the rotation of the spindle 143, the peel ply layer 152 is pulled over the middle rotatable bar 151 towards the spindle 143. Thereby, a portion of the peel ply layer 152, which is adjacent to the portion already wound around the spindle 143, is separated from the spar cap 136 and wound around the spindle 143.

The cart 141 is propelled forward in the longitudinal direction 120 along the spar cap 136. The motor 142 applies a rotational force to the spindle 143 which pulls the peel ply layer 152 towards the spindle 143 and which rotates the peel ply layer 152 around the spindle 143. A part of the peel ply layer 152 is fixed to the spar cap 136. This fixation generates a tension force in the peel ply layer 152 which has to be overcome by the spindle 143 when winding the peel ply layer 152 around the spindle 143. The spindle 143 and the motor 142 generate a reaction force to overcome the tension force in the peel ply layer 152. This reaction force propels the cart 141 forward.

The peel ply layer 152 is pulled in a direction away from the spar cap 136, wherein the direction is substantially perpendicular to the bottom surface 153 of the wind turbine rotor blade component 136. For example, the peel ply layer 152 being pulled away from the wind turbine rotor blade component 136 and the peel ply layer 152 still on the surface 153 of the spar cap 136 enclose an angle in the range of 80° to 90°. The exact angle is determined by the pulling force applied to the peel ply layer 152 by the spindle 143 and by the adhesive force between the peel ply layer 152 on the surface 153 of the wind turbine rotor blade component 136 and the surface 153. The angle can be adjusted by changing a setting of the motor 142 such that the motor 142 drives the spindle 143 with a stronger or with a weaker rotational force.

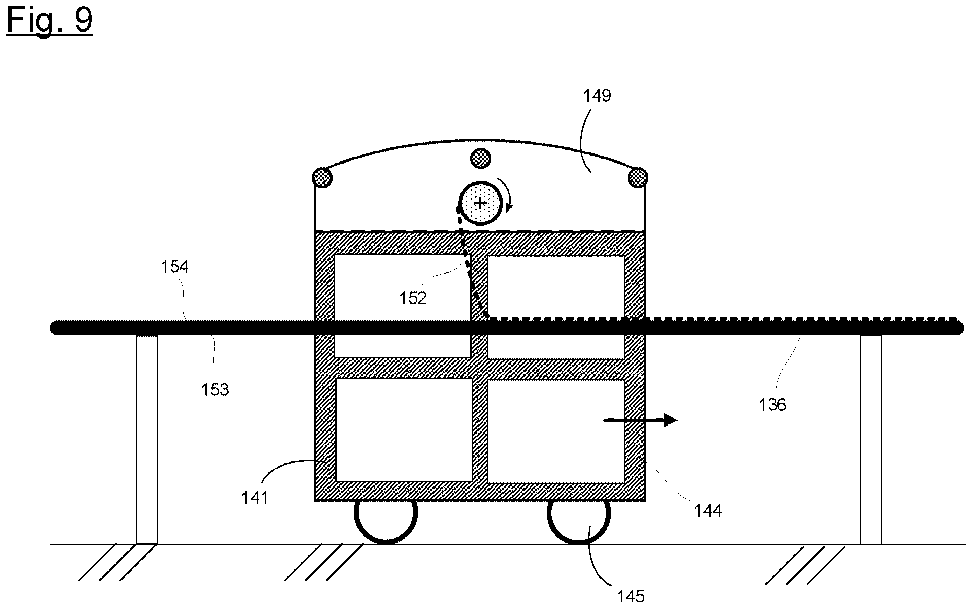

Figure 9 shows a method wherein the cart 141 is used to remove the peel ply layer 152 from a top surface 154 of a spar cap 136. The term "top surface" refers to a surface of the spar cap 136 which faces away from the ground floor.

The spar cap 136 is arranged below the spindle 143 of the cart 141. Thus, the peel ply layer 152 on the top surface 154 of the spar cap 136 faces towards the spindle 143. A first portion of the peel ply layer 152 is connected to the spindle 143, for example, by winding. Then, the motor 142 is activated such that the spindle 143 begins to rotate. The rotation of the spindle 143 winds the peel ply layer 152 further around the spindle 143, thereby removing the peel ply layer 152 from the top surface 154 of the spar cap 136. At the same time, the cart 141 is propelled forward by the reaction force of the rotation of the spindle 143.

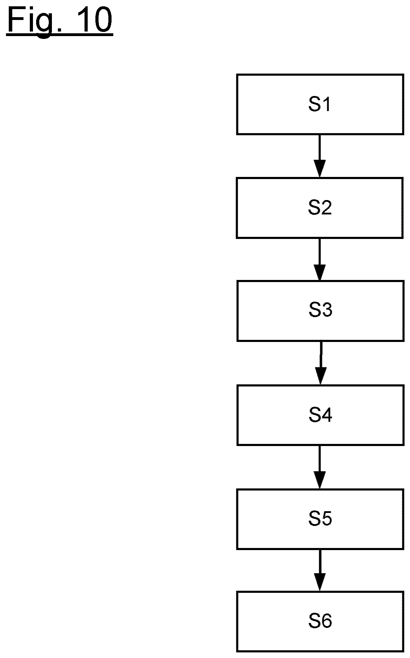

Figure 10 shows a flowchart of a method for removing a peel ply layer 152 from a wind turbine rotor blade component 136.

In a first step S1 of the method, the wind turbine rotor blade component 136 is provided. The wind turbine rotor blade component 136 comprises a surface 153, 154, at least one of which is covered by a peel ply layer 152.

In a second step S2, a cart 141 is provided. The cart 141 comprises a spindle 143 and a motor 142 configured to rotate the spindle 142. The cart 141 may be the cart shown in Figures 5 to 8 or 9.

In a third step S3, a first portion of the peel ply layer 152 is connected with the spindle 143. For example, the first portion may be wound around the spindle 143. The spindle 143 provides sufficient friction to prevent the first portion of peel ply layer 152 to slip from the spindle 143.

In a fourth step S4, the spindle 143 is rotated by the motor 142. The rotation of the spindle 143 pulls the peel ply layer 152 from the wind turbine rotor blade component 136 and winds the peel ply layer 152 around the spindle 143. The cart 141 is propelled forward in a longitudinal direction 120 of the wind turbine rotor blade component 136.

A first peel ply layer 152 may be arranged on a top surface 154 of the component 136 and a second peel ply layer 152 may be arranged on a bottom surface 153 of the component 136. Accordingly, one of the first or the second peel ply layer 152 has been removed in steps S3 and S4 from the respective surface.

In a fifth optional step S5, the wind turbine rotor blade component 136 may be flipped. Then the second peel ply layer 152 is removed from the same side (above or below the component 136).

In a sixth step S6, the steps S3 and S4 are repeated, thereby removing the respective other peel ply layer 152 from the wind turbine rotor blade component 136.

### Reference numbers

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: root end
- 127: tip end
- 128: flange connection
- 130: shell
- 132: half shell
- 134: leading edge
- 135: trailing edge
- 136: spar cap / wind turbine rotor blade component
- 138: cross-sectional profile
- 140: shear web
- 141: cart
- 142: motor
- 143: spindle
- 144: frame
- 145: wheel
- 146: rod
- 147: plate
- 148: side part
- 149: metal sheet
- 150: horizontal steel tube
- 151: rotatable bar
- 152: peel ply layer
- 153: bottom surface
- 154: top surface

## Claims

1. Method for removing a peel ply layer(152) from a wind turbine rotor blade component (136),
comprising the steps of:
i) providing a wind turbine rotor blade component (136) comprising a surface (153, 154) which is covered by a peel ply layer(152),
ii) providing a cart (141) comprising a spindle (143) and a motor (142) configured to rotate the spindle (143),
iii) connecting a first portion of the peel ply layer (152) with the spindle (143),
iv) rotating the spindle (143) via the motor (142) such that the rotation of the spindle (143) pulls the peel ply layer (152) from the wind turbine rotor blade component (136) and winds the peel ply layer (152) around the spindle (143), wherein the cart (141) is propelled forward in a longitudinal direction (120) of the wind turbine rotor blade component (136).

2. Method according to claim 1,
wherein the wind turbine rotor blade component (136) is a spar cap.

3. Method according to any one of the preceding claims, wherein the first portion of the peel ply layer (152) is removed manually from the wind turbine rotor blade component (136) in step iii).

4. Method according to any one of the preceding claims, wherein the first portion has a length of less than one meter.

5. Method according to any one of the preceding claims, wherein the cart (141) is propelled forward in the longitudinal direction (120) by a reaction force generated by the motor (142) and the spindle (143).

6. Method according to any one of claim 1 to 4,
wherein the cart (141) comprises a pair of wheels (145) and a second motor, and wherein the cart (141) is propelled forward in the longitudinal direction (120) during step iv) by the second motor rotating the pair of wheels (145).

7. Method according to any one of the preceding claims, wherein, during step iv), the peel ply layer (152) which is pulled from the wind turbine rotor blade component (136) and the peel ply layer (152) which is still on the wind turbine rotor blade component (136) enclose an angle in the range of 80° to 90°.

8. Method according to any one of the preceding claims, wherein, before step iii), the wind turbine rotor blade component (136) is lifted above the cart (141), and the peel ply layer (152) is removed from a bottom surface (153) of the wind turbine rotor blade component (136) which faces towards the ground during step iv).

9. Method according to claim 8,
wherein the cart (141) comprises at least one rotatable bar (151) on which the wind turbine rotor blade component (136) rests during step iv).

10. Method according to any one of claims 1 to 7,
wherein the wind turbine rotor blade component (136) is arranged below the spindle (143) during step iv) and wherein the peel ply layer (152) is removed from a top surface (154) of the wind turbine rotor blade component (136) which faces away from the ground during step iv).

11. Method according to any one of the preceding claims, wherein a first peel ply layer (152) is removed from a bottom surface (153) of the wind turbine rotor blade component (136), which faces towards the ground during step iv), and a second peel ply layer (152) is removed from a top surface (154) of the wind turbine rotor blade component (136) which is opposite of the bottom surface (153).

12. Method according to any one of the preceding claims, wherein a length of the spindle (143) is bigger than a maximum width of the wind turbine rotor blade component (136).

13. Method according to any one of the preceding claims, wherein the spindle (143) comprises a cross-section which is configured to generate friction between the first portion of the peel ply layer (152) and the spindle (143) to avoid slippage of the peel ply layer (152).

14. Method according to any one of the preceding claims, wherein the cart (141) is propelled along rails in step iv).

15. Device for performing a method according to any one of the preceding claims, comprising
a cart (141) comprising a spindle (143) and a motor (142) configured to rotate the spindle (143), wherein the cart (141) is configured to be propelled forward in a longitudinal direction (120) by a rotation of the spindle (143).
